# FASCICULE DE BREVET EUROPEEN

(11) **EP 1 817 520 B1**
(45) Date de publication et mention de la délivrance du brevet: **17.12.2008**
(21) Numéro de dépôt: 05820741.6
(22) Date de dépôt: 23.11.2005
(51) Int. Cl.: F16L 37/084

(54) **DOUILLE DE GUIDAGE A INSERTION FACILITEE DANS UN ALESAGE D'UN RACCORD ET RACCORD CORRESPONDANT**
LEICHT IN EINE VERBINDUNGSBOHRUNG EINZUFÜHRENDE FÜHRUNGSBUCHSE UND ENTSPRECHENDE VERBINDUNG
GUIDE BUSHING EASILY INSERTED INTO A CONNECTION BORE AND CORRESPONDING CONNECTION

(30) Priorité: 02.12.2004 FR 0412783
(43) Date de publication de la demande: 15.08.2007
(73) Titulaire: LEGRIS S.A., F-35000 Rennes (FR)
(72) Inventeur: BLIVET, Philippe, F-35200 RENNES (FR); PODER, Philippe, F-35580 GUICHEN (FR)
(74) Mandataire: Lavialle, Bruno François Stéphane
(86) Numéro de dépôt international: PCT/FR2005/002907
(87) Numéro de publication internationale: WO 2006/058981

(56) Documents cités:
- FR-A- 2 511 115
- FR-A- 2 789 147
- FR-A- 2 792 702

## Description

La présente invention concerne une douille de guidage d'un élément tubulaire dans un alésage d'un raccord, et un raccord correspondant.

### ARRIERE PLAN DE L'INVENTION

Un tel raccord est utilisable dans un circuit de transport de fluide pour le raccordement l'un à l'autre de deux éléments du circuit, à savoir un élément émetteur de fluide à un élément récepteur de fluide comme des conduites, une pompe, un réservoir, un distributeur, un actionneur...

Un raccord comprend généralement un corps délimitant un alésage et des moyens de connexion pour y assujettir de façon étanche un élément tubulaire tel qu'un embout. Ces moyens de connexion comprennent généralement un insert tubulaire rigide équipé d'un élément déformable d'étanchéité destiné à assurer une étanchéité entre le corps et l'embout et un organe d'accrochage de l'embout comme un verrou radial ou une rondelle dentée intérieurement (voir, par exemple, le document FR-A-2 789 147).

L'insert tubulaire est pourvu de portions de guidage de l'élément tubulaire qui délimitent un passage de section supérieure à la section de l'embout.

Le guidage réalisé est relativement bon mais parfois insuffisant pour éviter une ovalisation de l'embout ou un léger décentrement de celui-ci qui risqueraient de dégrader la qualité du contact entre l'élément d'étanchéité et l'embout.

En outre, l'introduction de l'insert dans l'alésage est habituellement réalisée à force par un effort d'emmanchement relativement important qui engendre des contraintes tant sur le corps du raccord que sur l'insert. Le retrait de l'insert, pour des raisons de maintenance par exemple, est en outre généralement difficile si ce n'est impossible sans détériorer l'insert et/ou le raccord.

### OBJET DE L'INVENTION

L'invention concerne une douille de guidage et un raccord ne présentant pas les inconvénients sus-cités ou tout au moins faiblement affectés par ceux-ci.

### BREVE DESCRIPTION DE L'INVENTION

A cet effet, on prévoit, selon l'invention une douille de guidage d'un élément tubulaire dans un alésage d'un raccord, la douille étant pourvue extérieurement d'éléments de retenue de la douille dans l'alésage et intérieurement de patins de guidage de l'élément tubulaire dans la douille. Les éléments de retenue et les patins de guidage sont associés à des parties de la douille qui sont déformables entre un premier état dans lequel les éléments de retenue sont dans une position active d'ancrage de la douille dans l'alésage et les patins délimitent une section de passage de l'élément tubulaire et un deuxième état dans lequel les éléments de retenue sont dans une position inactive en retrait de leur position active et les patins de guidage délimitent une section inférieure à la section de passage.

Ainsi, lorsque la douille est dans son deuxième état, elle peut être insérée dans l'alésage du raccord avec un effort relativement faible. Lorsque l'élément tubulaire est introduit dans la douille de guidage, la douille de guidage est dans son premier état de sorte que les éléments de retenue sont dans leur position d'ancrage et assurent une ferme retenue de la douille dans l'alésage. L'élément tubulaire, en formant un appui pour les patins de guidage, empêche le retour de la douille dans son deuxième état. En outre, la douille peut être agencée pour que les patins de guidage et l'élément tubulaire exercent l'un sur l'autre une pression de contact réciproque reprise par les éléments de retenue et la paroi de l'alésage qui exercent également les uns sur les autres une pression de contact réciproque. L'effort exercé par les patins de guidage sur l'élément tubulaire permet le positionnement de l'élément tubulaire et limite voire empêche son ovalisation.

De préférence, la douille est divisée en premiers et deuxièmes secteurs angulaires, les premiers secteurs angulaires étant rigides et les deuxièmes secteurs angulaires étant déformables et comportant une incurvation centrale vers l'intérieur pourvue intérieurement du patin de guidage et deux arêtes sommitales s'étendant de part et d'autre de l'incurvation centrale pour former les éléments de retenue.

L'effort exercé par l'élément tubulaire sur les patins de guidage tend ainsi à écarter les unes des autres les arêtes sommitales qui vont être appliquées contre la paroi de l'alésage du raccord et/ou saillir dans une gorge de celui-ci. La présence des secteurs angulaires déformables confère en outre une relative souplesse à la douille de guidage qui peut faciliter son introduction dans le corps du raccord. Ce mode de réalisation est particulièrement simple et efficace.

L'invention a également pour objet un raccord fluidique comportant un corps délimitant un alésage pourvu de moyens de connexion d'un élément tubulaire, l'alésage recevant une douille de guidage présentant les caractéristiques ci-dessus. L'élément tubulaire et les patins de guidage comportent des surfaces de leur glissement relatif, ces surfaces étant agencées pour amener les parties déformables de leur deuxième état vers leur premier état lors de l'introduction de l'élément tubulaire dans la douille.

Ainsi, le passage de la douille de son deuxième état vers son premier état résulte de la coopération des surfaces de glissement des patins de guidage et de l'élément tubulaire lors de l'introduction de ce dernier dans la douille de guidage. Le passage de la douille de son deuxième état vers son premier état est ainsi automatique et ne nécessite pas que l'opérateur réalise des opérations autres que l'introduction de l'élément tubulaire dans la douille.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :

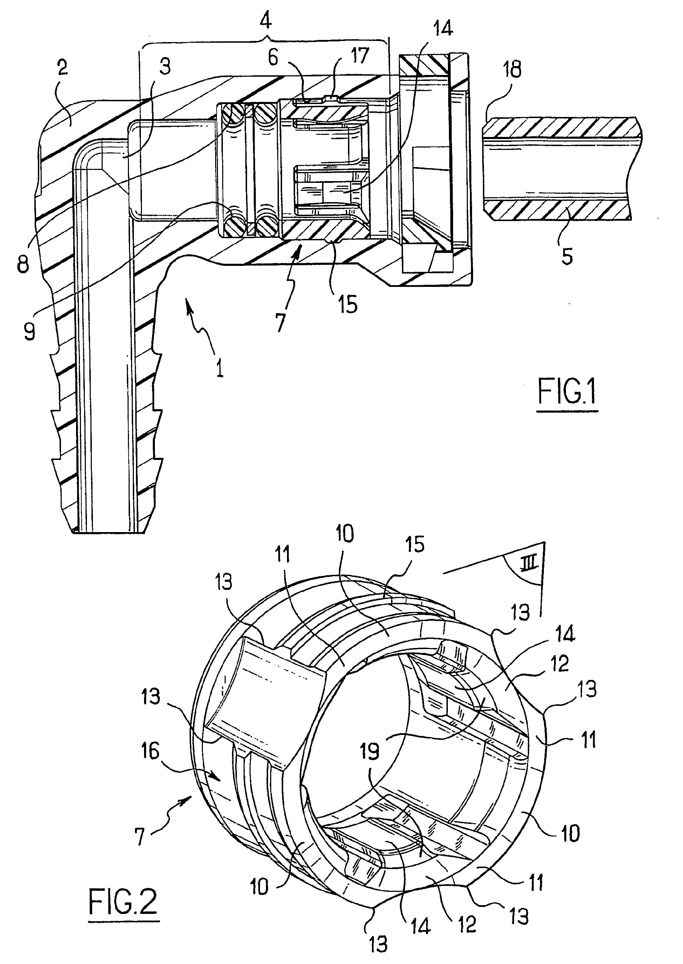

- la figure 1 est une vue en coupe longitudinale d'un raccord conforme à l'invention,
- la figure 2 est une vue en perspective d'une douille de guidage conforme à l'invention,
- la figure 3 illustre, en coupe transversale selon le plan III de la figure 2, la douille conforme à l'invention dans son premier état et dans son deuxième état.

### DESCRIPTION DETAILLEE DE L'INVENTION

En référence aux figures, le raccord conforme à l'invention, généralement désigné en 1, comprend un corps tubulaire 2, ici coudé, délimitant un alésage 3 dont une extrémité 4 est agencée pour recevoir un élément tubulaire 5 tel qu'un embout ou une extrémité de conduite.

L'extrémité 4 de l'alésage 3 est étagée et comprend une section 6 recevant une douille de guidage généralement désignée en 7 et une section 8 recevant des éléments d'étanchéité 9 connus en eux-mêmes.

La douille de guidage 7 a une surface externe 16 présentant un diamètre légèrement inférieur au diamètre de la section 6 de l'alésage 3. Une collerette 15 s'étend sur la surface externe 16. La collerette 15 a un diamètre externe légèrement inférieur à un diamètre en fond de gorge d'une gorge 17 réalisée dans la section 6.

La douille de guidage 7 est divisée en secteurs angulaires 10 et 11 disposés en alternance.

Les secteurs angulaires 10 délimitent un diamètre interne légèrement supérieure au diamètre externe de l'élément tubulaire 5 et ont une épaisseur relativement importante de sorte qu'ils sont relativement rigides.

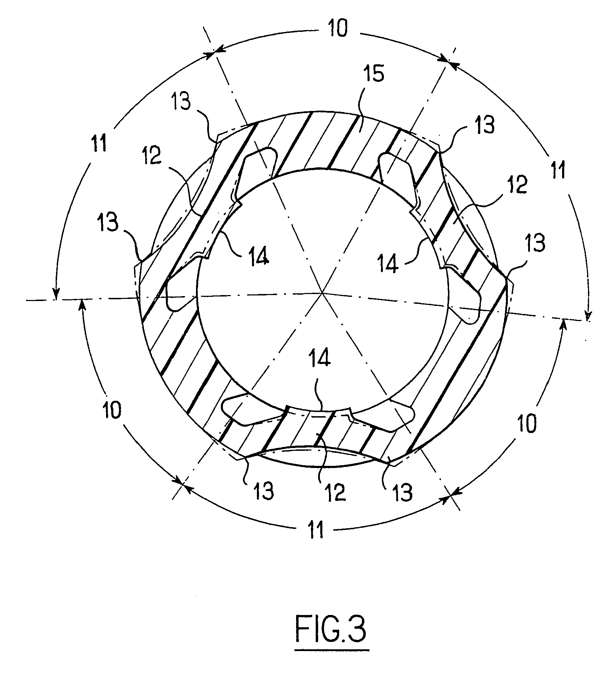

Les secteurs angulaires 11 présentent une incurvation centrale 12 vers l'intérieur et deux arêtes sommitales 13 s'étendant axialement de part et d'autre de l'incurvation centrale 12. Un patin de guidage 14 est formé sur la surface interne de l'incurvation centrale 12. Les secteurs angulaires 11 ont une épaisseur plus faible que celle des secteurs angulaires 10 de sorte qu'ils soient déformables. Les secteurs angulaires 11 forment ainsi des parties déformables de la douille 7 entre un premier état, représenté en trait mixte à la figure 3, et un deuxième état, représenté en trait fort à la figure 3.

Dans le premier état, les patins de guidage 14 délimitent une section de passage de l'élément tubulaire 5, cette section de passage ayant un diamètre sensiblement égal à un diamètre externe de l'élément tubulaire 5. Dans le deuxième état, les patins de guidage 14 définissent une section ayant un diamètre inférieur au diamètre externe de l'élément tubulaire 5.

Dans le premier état, les arêtes sommitales 13 délimitent au niveau de la collerette 15 une section de diamètre supérieur au diamètre externe de la collerette 15 et au niveau de la surface externe 16 une section de diamètre supérieur au diamètre externe de la douille de guidage 7 (hors collerette). Dans le deuxième état, les arêtes sommitales 13 délimitent au niveau de la collerette 15 un diamètre sensiblement égal à celui de la collerette et au niveau de la surface externe 16 un diamètre sensiblement égal à celui de la douille de guidage 7.

Le raccord 1 comprend également des moyens de connexion pour assujettir l'élément tubulaire 5 dans le raccord 1. Ces moyens de connexion sont connus en eux-mêmes et comprennent ici un verrou annulaire monté mobile radialement en regard de l'extrémité 4 de l'alésage 3. Ce verrou annulaire comporte une saillie interne destinée à être reçue dans une gorge de l'élément tubulaire. Bien entendu, d'autres moyens de connexion sont utilisables et notamment une rondelle d'accrochage ayant une circonférence interne divisée en une pluralité de dents destinées à mordre la surface du tube.

La douille de guidage 7 est introduite dans l'extrémité 4 de l'alésage 3 alors qu'elle est dans son deuxième état. Cette introduction est réalisée à force.

La collerette 15 reçue dans la gorge 17 maintient la douille de guidage 7 en position axiale. Il est toutefois à noter que le maintien ainsi réalisé est de relativement faible résistance afin de limiter l'effort d'introduction. Le maintien réalisé est toutefois suffisant pour retenir les éléments d'étanchéité 9 en position lors des manipulations que subit le raccord avant son implantation dans un circuit de transport de fluide.

Lorsque l'élément tubulaire 5 est introduit dans la douille de guidage 7, la surface biseautée extérieurement 18 de l'élément tubulaire 5 rencontre la surface avant inclinée 19 des patins de guidage 14 de telle manière que le glissement de ces deux surfaces l'une contre l'autre amène les secteurs angulaires 11 dans leur premier état. Les arêtes sommitales 13 sont alors fermement appliqués contre le fond de la gorge 17 et contre la paroi de la section 6 de l'alésage 3 et forment des éléments de retenue additionnels de la douille de guidage 7 dans l'alésage 3. Cette pression de contact est exercée par l'élément tubulaire 5 via les patins de guidage 14 et s'oppose à un mouvement axial de la douille de guidage. On notera, par ailleurs, que l'utilisation d'une collerette 15 et d'une gorge 17 est facultative lorsque le coefficient de frottement de la douille 7 sur la paroi de l'alésage 3 est suffisant pour assurer par frottement ou friction l'immobilisation axiale de la douille.

Lorsque l'élément tubulaire 5 est retiré du raccord, les secteurs angulaires 11 de la douille de guidage 7 reviennent élastiquement dans leur deuxième état.

Bien entendu, l'invention n'est pas limitée au mode de réalisation décrit et on peut y apporter des variantes de réalisation sans sortir du cadre de l'invention tel que défini par les revendications.

En particulier, chaque patin de guidage peut être solidaire de la face intérieure de l'extrémité libre d'une patte déformable découpée dans la douille, l'élément de retenue correspondant étant lui solidaire de la face extérieure de cette extrémité libre.

Les déformation des secteurs angulaires 11 peuvent être des déformations plastiques.

En outre, le nombre et la forme des secteurs angulaires 10 et 11 peuvent être différents de ceux décrits.

La douille de guidage peut ne comporter de redans externes qu'au niveau des arêtes sommitales 13.

## Revendications

1. Douille de guidage (7) d'un élément tubulaire (5) dans un alésage (3) d'un raccord (4), la douille étant pourvue extérieurement d'éléments de retenue (13) de la douille dans l'alésage et intérieurement de patins de guidage (14) de l'élément tubulaire dans la douille, **caractérisée en ce que** les éléments de retenue et les patins de guidage sont associés à des parties (11) de la douille qui sont déformables entre un premier état dans lequel les éléments de retenue sont dans une position active d'ancrage de la douille dans l'alésage et les patins délimitent une section de passage de l'élément tubulaire et un deuxième état dans lequel les éléments de retenue sont dans une position inactive en retrait de leur position active et les patins de guidage délimitent une section inférieure à la section de passage.

2. Douille selon la revendication 1, **caractérisée en ce qu'**elle est divisée en premiers et deuxièmes secteurs angulaires (10, 11), les premiers secteurs étant rigides et les deuxièmes secteurs angulaires étant déformables et comportant une incurvation centrale (12) vers l'intérieur pourvue intérieurement du patin de guidage (14) et deux arêtes sommitales (13) s'étendant de part et d'autre de l'incurvation centrale pour former les éléments de retenue.

3. Douille selon la revendication 2, **caractérisée en ce que** la douille (7) comprend une collerette (15) en saillie externe des premiers et deuxièmes secteurs angulaires (10, 11).

4. Raccord fluidique (1) comportant un corps (2) délimitant un alésage (3) pourvu de moyens de connexion d'un élément tubulaire (5), l'alésage recevant une douille de guidage (7) de l'élément tubulaire dans l'alésage, **caractérisé en ce que** la douille de guidage est conforme à l'une quelconques des revendications précédentes, et **en ce que** l'élément tubulaire et les patins de guidage (14) comportent des surfaces (18, 19) de leur glissement relatif, ces surfaces étant agencées pour amener les parties déformables (11) de leur deuxième état vers leur premier état lors de l'introduction de l'élément tubulaire dans la douille.

5. Raccord selon la revendication 4, **caractérisé en ce que** les patins de guidage (14) ont une surface de glissement (19) formant une rampe.

6. Raccord selon la revendication 4 ou la revendication 5, **caractérisé en ce que** l'élément tubulaire (5)comprend une surface de glissement formant une rampe (18).

## Claims

1. A guide bushing (7) for guiding a tubular element (5) in a bore (3) of a coupling (4), the bushing being provided externally with retaining elements (13) for retaining the bushing in the bore, and internally with guide shoes (14) for guiding the tubular element inside the bushing, the bushing being **characterized in that** the retaining elements and the guide shoes are associated with portions (11) of the bushing that are deformable between a first state in which the retaining elements are in an active position anchoring the bushing in the bore and in which the shoes define a section for passing the tubular element, and a second state in which the retaining elements are in inactive position set back from their active position and in which the guide shoes define a section that is smaller than the section for passing the tubular element.

2. A bushing according to claim 1, **characterized in that** it is subdivided into first and second angular sectors (10, 11), the first sectors being rigid and the second angular sectors being deformable, and each comprising both a central inwardly-directed curved indentation (12), provided internally with a guide shoe (14), and two ridges (13) extending on either side of the central indentation to form the retaining elements.

3. A bushing according to claim 2, **characterized in that** the bushing (7) includes a collar (15) projecting outwardly from the first and second angular sectors (10, 11).

4. A fluid coupling (1) comprising a body (2) defining a bore (3) provided with connection means for connecting a tubular element (5), the bore receiving a guide bushing (7) for guiding the tubular element in the bore, the coupling being **characterized in that** the guide bushing is in accordance with any preceding claim, and **in that** the tubular elements and the guide shoes (14) have sliding surfaces (18, 19) for sliding mutually against one another, said surfaces being arranged to move the deformable portions (11) from their second state towards their first state during insertion of the tubular element into the bushing.

5. A coupling according to claim 4, **characterized in that** the guide shoes (14) have respective ramp-forming sliding surfaces.

6. A coupling according to claim 4 or claim 5, **characterized in that** the tubular element (5) has a ramp-forming sliding surface (18).

## Patentansprüche

1. Führungsbuchse (7) zur Führung eines rohrförmigen Elements (5) in einer Bohrung (3) eines Anschlussstückes (4), wobei die Buchse außen mit Rückhalteelementen (13) zum Halten der Buchse in der Bohrung und innen mit Führungskufen (14) zur Führung des rohrförmigen Elements in der Buchse versehen ist, **dadurch gekennzeichnet, dass** die Rückhalteelemente und die Führungskufen mit Abschnitten (11) der Buchse verbunden sind, die zwischen einem ersten Zustand, in dem die Rückhalteelemente in einer aktiven Verankerungsposition zum Verankern der Buchse in der Bohrung sind und die Kufen einen Durchtrittsquerschnitt für das rohrförmige Element begrenzen, und einem zweiten Zustand verformbar sind, in dem die Rückhalteelemente in einer inaktiven, gegenüber ihrer aktiven Position zurückversetzten Position sind und die Führungskufen einen Querschnitt begrenzen, der kleiner als der Durchtrittsquerschnitt ist.

2. Buchse nach Anspruch 1, **dadurch gekennzeichnet, dass** sie in erste und zweite Winkelsektoren (10, 11) unterteilt ist, wobei die ersten Sektoren starr und die zweiten Winkelsektoren verformbar sind und eine zentrale Biegung (12) nach innen umfassen, die innen mit der Führungskufe (14) versehen ist, sowie zwei Scheitelkanten (13) haben, die sich auf beiden Seiten der zentralen Biegung erstrecken, um die Rückhalteelemente zu bilden.

3. Buchse nach Anspruch 2, **dadurch gekennzeichnet, dass** die Buchse (7) einen von den ersten und zweiten Winkelsektoren (10, 11) nach außen abstehenden Bund (15) umfasst.

4. Fluidanschlussstück (1), umfassend ein Gehäuse (2), das eine Bohrung (3) begrenzt, die mit Verbindungsmitteln zur Verbindung mit einem rohrförmigen Element (5) versehen ist, wobei die Bohrung eine Führungsbuchse (7) zur Führung des rohrförmigen Elements in der Bohrung aufnimmt, **dadurch gekennzeichnet, dass** die Führungsbuchse gemäß einem der vorhergehenden Ansprüche ausgebildet ist, und dass das rohrförmige Element und die Führungskufen (14) Oberflächen (18, 19) für ein Gleiten aneinander umfassen, wobei diese Oberflächen derart ausgebildet sind, dass sie die verformbaren Abschnitte (11) beim Einführen des rohrförmigen Elements in die Buchse von ihrem zweiten Zustand in ihren ersten Zustand bringen.

5. Anschlussstück nach Anspruch 4, **dadurch gekennzeichnet, dass** die Führungskufen (14) eine Gleitfläche (19) haben, die eine Rampe bildet.

6. Anschlussstück nach Anspruch 4 oder Anspruch 5, **dadurch gekennzeichnet, dass** das rohrförmige Element (5) eine Gleitfläche umfasst, die eine Rampe (18) bildet.
